# EUROPÄISCHE PATENTSCHRIFT

(11) **EP 3 720 724 B1**
(45) Veröffentlichungstag und Bekanntmachung des Hinweises auf die Patenterteilung: **02.08.2023**
(21) Anmeldenummer: 18778438.4
(22) Anmeldetag: 24.09.2018
(51) Int. Cl.: B60C 23/04

(54) **VERFAHREN ZUM ÜBERTRAGEN VON DATEN EINES REIFENMODULS ZU EINEM ZENTRALEN DATENSERVER**
METHOD FOR TRANSFERRING DATA OF A TIRE MODULE TO A CENTRAL DATA SERVER
PROCÉDÉ PERMETTANT DE TRANSMETTRE À UN SERVEUR DE DONNÉES CENTRAL DES DONNÉES RELATIVES À UN MODULE DE PNEUMATIQUE

(30) Priorität: 07.12.2017 DE 102017222122
(43) Veröffentlichungstag der Anmeldung: 14.10.2020
(73) Patentinhaber: Continental Reifen Deutschland GmbH, 30165 Hannover (DE)
(72) Erfinder: FRAISS, Karim, 30419 Hannover (DE); WILHELMSEN, Sven, 30419 Hannover (DE)
(74) Vertreter: Continental Corporation
(86) Internationale Anmeldenummer: PCT/EP2018/075721
(87) Internationale Veröffentlichungsnummer: WO 2019/110159

(56) Entgegenhaltungen:
- WO-A1-2017/181629
- CN-A- 106 926 648
- US-A- 6 087 930

## Beschreibung

Die Erfindung betrifft ein Verfahren zum Übertragen von Daten eines Reifenmoduls zu einem zentralen Datenserver.

Es ist bekannt, Fahrzeugreifen mit unterschiedlichen Sensoren zu versehen.

Aus dem Stand der Technik sind unterschiedliche Konzepte bekannt, Sensoren am Reifen anzuordnen. Alle herkömmlichen Konzepte besitzen unterschiedliche Nachteile.

Bei herkömmlichen Reifensensoren werden Messdaten zu einer zentralen Empfangseinheit im Fahrzeug übertragen. Die zentrale Empfangseinheit im Fahrzeug wertet die Messdaten aus, und es erfolgt anschließend eine Anzeige im Armaturenbrett des Fahrzeuges. Die Auswertung der Messdaten, die von den Reifensensoren erfasst werden, ist somit immer von einer zentralen Empfangseinheit im Fahrzeug abhängig.

Derartige Reifensensoren mit einer Verarbeitung der Messdaten in einer zentralen Empfangseinheit im Fahrzeug sind beispielsweise in WO 2017/181629 A1 oder CN 106 926 648 A offenbart. Ein weiterer Reifensensor, der mit RFID-Technologie ausgelesen werden kann, wird in US 6 087 930 A beschrieben.

Der Erfindung liegt die Aufgabe zugrunde, Fahrzeugreifen mit Sensoren und die Datenübertragung zu Nutzern zu verbessern.

Gelöst wird die Aufgabe mit einem Verfahren nach Anspruch 1.

Ein Vorteil der Erfindung ist insbesondere darin zu sehen, dass mit dem neuen Verfahren auf einfache Weise eine Datenübermittlung zu einem zentralen Datenserver im Internet erfolgt. Die einzelnen Fahrzeuge müssen nunmehr nicht mehr eine eigene zentrale Sende- und Empfangseinheit aufweisen, um die Messdaten von den Reifenmodulen zu empfangen und auszuwerten. Jedes Reifenmodul ist über eine Niedrigenergieweitverkehrnetzwerk Verbindung, die ebenfalls als "Low Power Wide Area Network" Verbindung bezeichnet wird, direkt mit einem zentralen Server im Internet verbunden, der die Daten über ein Webportal oder einer App den Nutzern bereitstellt. Beim Niedrigenergieweitverkehrnetzwerk handelt es sich um einen besonderen Standard für eine Mobilfunknetz-Verbindung. Nutzer sind beispielsweise der Fahrer des Fahrzeuges, welches mit den Reifenmodulen ausgerüstet ist oder ein Fuhrparkmanagement, welches für die Wartung der Fahrzeugreifen zuständig ist. Auf diese Weise kann sowohl auf zusätzliche Hardware als auch auf Software im Fahrzeug verzichtet werden, die bei den herkömmlichen Systemen für die Auswertung der Messdaten erforderlich ist. Erfindungsgemäß ist vorgesehen, dass bei Schritt c) das Übertragen der Daten über eine Narrow-Band IoT-Verbindung erfolgt.

Dabei handelt es sich um ein so genanntes "Niedrigenergie-Langstrecken-Netzwerk", die eine Klasse von Netzwerkprotokollen und Technologien zur drahtlosen Datenübertragung umfasst. Mit dieser Klasse von Netzwerkprotokollen und Technologien lassen sich Daten drahtlos über eine größere Distanz, auch durch feste Materialien hindurch (z.B. einem Reifen) übertragen. Weitere wesentliche Eigenschaften solcher Protokolle und Technologien sind ein niedriger Energieverbrauch und die Möglichkeit Intervall-, Trigger und/oder Eventbezogen Daten zu übertragen.

In einer weiteren vorteilhaften Weiterbildung der Erfindung ist vorgesehen, dass nach Schritt d) der Nutzer ein Fahrzeugfahrer ist und die ausgewerteten Daten über eine drahtlose Verbindung auf eine Anzeigevorrichtung im Fahrzeug übertragen werden. Es ist ebenfalls möglich, dass es sich bei der Anzeigevorrichtung um ein mobiles Endgerät wie ein Smartphone oder ein Tablett handelt.

Dadurch können dem Fahrer des Fahrzeuges die ausgewerteten Daten auf einfache Weise optisch zur Verfügung gestellt werden. Der Fahrer erhält beispielsweise die Information, welcher Reifendruck in den einzelnen Fahrzeugreifen vorliegt oder ob ein Reifen einen Alarm aufweist.

In einer weiteren vorteilhaften Weiterbildung der Erfindung ist vorgesehen, dass nach Schritt d) der Endkunde ein Flottenbetreiber oder der Lösungs-Betreiber ist und dieser über ein Web-Portal auf die ausgewerteten Daten zugreifen kann. Es ist ebenfalls möglich, dass Dritte, wie zum Beispiel Servicepartner oder Händler, auf diese Daten zugreifen. Dadurch kann ein Flottenbetreiber oder ein Fuhrparkmanagement auf einfache Weise den Zustand und die Wartung der Fahrzeugreifen überwachen. Wenn beispielsweise Fahrzeugreifen an einem Fahrzeug einen zu geringen Reifendruck aufweisen, kann das Fuhrparkmanagement die entsprechenden Maßnahmen ergreifen. Außerdem hat das Fuhrparkmanagement auf diese Weise immer einen Zugriff auf die Reifendaten, die beispielsweise das Reifenalter oder den Reifentyp umfassen.

Auf Basis von Triangulation über die Standorte der Mobilfunkantennen mit denen der Sensor komuniziert, ist es ebenfalls möglich weitere, nicht reifenbezogene Daten zu erfassen, wie die Position des Sensors. Hiermit lassen sich weitere Dienstleistungen anbieten wie z.b. Diebstalschutz, falls der Sensor einen definierten Bereich verlässt. Hierfür ist es nicht nötig, dass der Reifen an einem Fahrzeug verbaut ist.

Erfindungsgemäß ist vorgesehen, dass bei Schritt a) mit dem Reifenmodul zumindestens der Reifendruck erfasst und ausgewertet wird,
wobei bei einer Abweichung des gemessenen Reifendruckes vom vorgegebenen Sollwert eine Fehlermeldung generiert und bei Schritt d) dem Endkunden angezeigt wird.

Auf diese Weise entfällt das manuelle Überprüfen des Reifendruckes an den Fahrzeugreifen, wobei diese manuelle Reifendruckkontrolle insbesondere bei Nutzfahrzeugen mit sehr vielen Reifen immer mit viel Zeitaufwand verbunden ist.

In einer weiteren vorteilhaften Weiterbildung der Erfindung ist vorgesehen, dass die Fehlermeldung bei einer Abweichung von mindestens 5% vom Sollwert des Reifendruckes generiert wird.

Ab einer Abweichung von über 5 % vom Sollwert erhöht sich der Rollwiderstand der Fahrzeugreifen signifikant. Durch diese Maßnahme kann gewährleistet werden, dass die Fahrzeugreifen immer mit einem optimalen Reifendruck betrieben werden und die bestmögliche Laufleistung erreicht wird.

Es ist ebenfalls möglich, dass Fehlermeldungen auf Basis von anderen Kriterien und anderen Sollwerten generiert werden, wie beispielsweise Profiltiefe, Laufleistung, Last, Abweichung zu einer defnierten Position.

In einer weiteren vorteilhaften Weiterbildung der Erfindung ist vorgesehen, dass das Reifenmodul bei Schritt c) nur in vorgegebenen Zeitintervallen Daten über die "Low Power Wide Area Network" Verbindung zum zentralen Datenserver im Internet überträgt. Auf diese Weise wird der Energieverbrauch des Reifenmoduls gering gehalten. Das Zeitintervall zum Senden von Daten würde beispielsweise bei einem Tag liegen.

Außerdem ist denkbar, dass das Reifenmodul zusätzlich dann Daten zum zentralen Server sendet, wenn beispielsweise ein zu geringer Reifendruck erfasst wurde.

In einer weiteren vorteilhaften Ausbildung ist vorgesehen, dass das Reifenmodul auch dann eine Verbindung zum Server aufbaut, wenn ein Wert vom definierten Sollwert abweicht.

In einer weiteren vorteilhaften Ausbildung ist vorgesehen, dass das Reifenmodul nur oder auch dann Daten sendet wenn ein Datenversand vom Benutzer, bzw. Server angefordert wird ("Trigger").

In einer weiteren vorteilhaften Weiterbildung der Erfindung ist vorgesehen, dass das Reifenmodul in einem Reifenhohlraum auf der Reifeninnenseite, einem am Reifen angebrachten Container, einer am Reifen angebrachten Haltevorrichtung an der Reifenfelge oder am Reifenventil angeordnet ist.

Diese Positionen sind besonders vorteilhaft, um Messdaten wie beispielsweise den Reifendruck am Fahrzeugreifen zu erfassen.

Anhand eines Ausführungsbeispieles soll die Erfindung näher erläutert werden. Es zeigt:

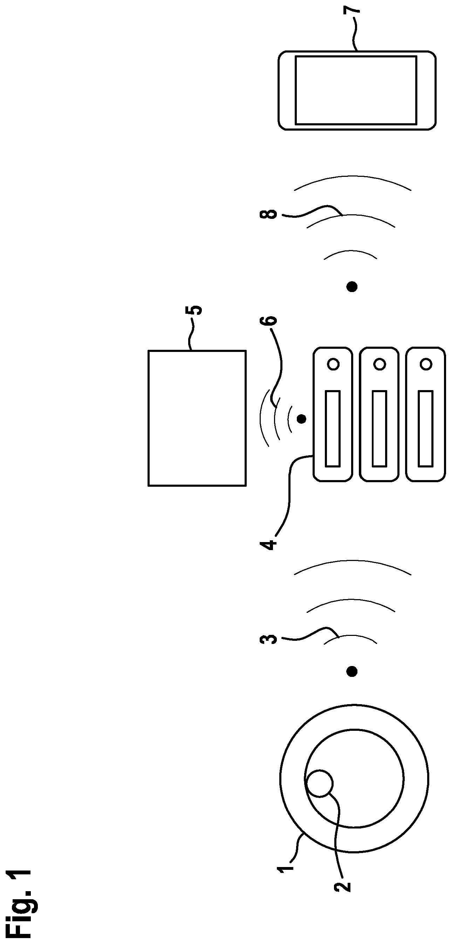

Fig. 1: ein Verfahren zum Übertragen von Daten eines Reifenmoduls zu einem zentralen Datenserver

Die Figur 1 zeigt schematisch ein Verfahren zum Übertragen von Daten eines Reifenmoduls zu einem zentralen Datenserver.

Der Fahrzeugreifen 1 weist ein Reifenmodul 2 auf, welches auf der Reifeninnenseite im Reifenhohlraum, einem am Reifen angebrachten Container, einer am Reifen angebrachten Haltevorrichtung an der Fahrzeugfelge im Reifenhohlraum oder am Reifenventil angeordnet ist. Mit dem Reifenmodul 2 werden physikalische Messdaten des Reifens erfasst, wie beispielsweise der Reifendruck oder die Temperatur im Reifenhohlraum. Außerdem kann das Reifenmodul über einen Speicher verfügen, in dem individuelle Reifendaten abgespeichert sind. Zu diesen Reifendaten zählen beispielsweise das Herstellungsdatum des Fahrzeugreifens oder der Reifentyp. Die mit dem Reifenmodul erfassten Messdaten und Reifendaten werden über eine Rechnereinheit direkt im Reifenmodul ausgewertet. Anschließend erfolgt die Übertragung der Daten zu einem zentralen Datenserver 4 im Internet. Diese Datenübertragung 3 erfolgt direkt über ein "Low Power Wide Area Network". Bei der Datenübertragung ist keine zentrale Empfangseinheit im Fahrzeug dazwischengeschaltet. Der zentrale Datenserver im Internet bereitet die Daten unter Umständen noch einmal auf und stellt sie dann beispielsweise über ein Webportal den Endkunden zur Verfügung. Die Daten werden beispielsweise vom zentralen Server an eine Anzeigevorrichtung im Fahrzeug weitergeleitet. Die Datenübertragung 6 kann z.B. über eine Mobilfunknetz-Verbindung erfolgen. Die entsprechenden Daten würden schließlich auf einem Display im Armaturenbrett des Fahrzeuges angezeigt werden. Der Fahrer des Fahrzeuges erhält somit beispielsweise die Information, welcher Reifendruck an den einzelnen Fahrzeugreifen anliegt. Der zentrale Datenserver kann die Daten ebenfalls über ein Webportal einem Flottenbetreiber zur Verfügung stellen. Der Flottenbetreiber hat die Möglichkeit, auf einfache Weise über das Webportal auf alle Fahrzeugreifen zuzugreifen, die mit dem zentralen Datenserver vernetzt sind. Er hat somit beispielsweise einen schnellen Überblick, bei welchen Fahrzeugreifen demnächst ein Reifenwechsel erforderlich ist. Außerdem kann er die entsprechenden Maßnahmen ergreifen, damit alle Fahrzeugreifen seiner Fahrzeugflotte mit einem optimalen Reifendruck betrieben werden.

### Bezugszeichenliste (ist Teil der Beschreibung)

- 1: Fahrzeugreifen
- 2: Reifenmodul
- 3: Datenübertragung über ein Low Power Wide Area Network, bzw. Niedrigenergieweitverkehrnetzwerk
- 4: Zentraler Datenserver
- 5: Anzeigevorrichtung im Fahrzeug
- 6: Datenübertragung zur Anzeigevorrichtung
- 7: Anzeigevorrichtung beim Flottenbetreiber
- 8: Datenübertragung zur Anzeigevorrichtung

## Patentansprüche

1. Verfahren zum Übertragen von Daten eines Reifenmoduls (2) zu einem zentralen Datenserver,
mit mindestens den folgenden Schritten,
a) Bereitstellen eines Fahrzeugreifens (1) mit einem Reifenmodul (2), wobei mit dem Reifenmodul (2) Messdaten und/oder individuelle Reifendaten erfasst werden, wobei mit dem Reifenmodul (2) zumindestens der Reifendruck erfasst wird,
b) Auswerten der Messdaten und/oder Reifendaten mit einer im Reifenmodul (2) integrierten Rechnereinheit, wobei mit dem Reifenmodul (2) zumindestens der Reifendruck ausgewertet wird, wobei bei einer Abweichung des gemessenen Reifendruckes von einem vorgegebenen Sollwert eine Fehlermeldung generiert wird,
c) Übertragen der Messdaten und/oder Reifendaten mit einer im Reifenmodul (2) integrierten Sende- und Empfangseinheit, wobei die Messdaten und/oder Reifendaten vom Reifenmodul (2) direkt über eine Niedrigenergieweitverkehrnetzwerk-Verbindung zum zentralen Datenserver (4) im Internet übertragen werden, wobei bei der Datenübertragung keine zentrale Empfangseinheit im Fahrzeug dazwischengeschaltet ist und das Übertragen der Daten über eine Narrow-Band IoT-Verbindung erfolgt,
d) Empfangen und Auswerten der Messdaten und/oder Reifendaten mit dem zentralen Datenserver (4) und Bereitstellen der Daten an einen Nutzer, wobei dem Nutzer die bei einer Abweichung des gemessenen Reifendruckes von einem vorgegebenen Sollwert generierte Fehlermeldung angezeigt wird.

2. Verfahren nach dem vorhergehenden Anspruch,
**dadurch gekennzeichnet, dass**
nach Schritt d) der Nutzer ein Fahrzeugfahrer ist und die ausgewerteten Daten über eine Funkverbindung (6) auf eine Anzeigevorrichtung (5) im Fahrzeug übertragen werden.

3. Verfahren nach einem der vorhergehenden Ansprüche,
**dadurch gekennzeichnet, dass**
nach Schritt d) der Nutzer ein Flottenbetreiber, Händler, Dienstleister oder der Lösungs-Betreiber ist und dieser über ein Web-Portal auf die ausgewerteten Daten zugreifen kann.

4. Verfahren nach einem der vorhergehenden Ansprüche,
**dadurch gekennzeichnet, dass**
die Fehlermeldung bei einer Abweichung von mindestens 5% vom Sollwert des Reifendruckes generiert wird.

5. Verfahren nach einem der vorhergehenden Ansprüche,
**dadurch gekennzeichnet, dass**
das Reifenmodul (2) bei Schritt c) in vorgegebenen Zeitintervallen Daten über das Niedrigenergieweitverkehrnetzwerk zum zentralen Datenserver (4) im Internet üb erträgt.

6. Verfahren nach einem der vorhergehenden Ansprüche,
**dadurch gekennzeichnet, dass**
das Reifenmodul (2) in einem Reifenhohlraum auf der Reifeninnenseite, an der Reifenfelge oder am Reifenventil angeordnet ist.

7. Fahrzeugreifen (1) mit einem Laufstreifen, einem Reifengürtel, einer Reifenkarkasse mit mindestens einer Karkasslage, Seitenwänden und einem Reifenwulst mit einem Reifenkern sowie einem Kernreiter,
wobei der Fahrzeugreifen (1) ein Reifenmodul (2) zum Erfassen von Messdaten und/oder individuellen Reifendaten aufweist, wobei mit dem Reifenmodul (2) zumindestens der Reifendruck erfassbar ist,
**dadurch gekennzeichnet, dass**
das Reifenmodul (2) auch zum Auswerten von Messdaten und/oder individuellen Reifendaten ausgebildet ist, wobei mit dem Reifenmodul (2) zumindestens der Reifendruck auswertbar ist, wobei bei einer Abweichung des gemessenen Reifendruckes von einem vorgegebenen Sollwert eine Fehlermeldung generiert werden kann,
das Reifenmodul (2) eine integrierte Sende- und Empfangseinheit aufweist,
wobei mit der Sende- und Empfangseinheit Messdaten und/oder Reifendaten vom Reifenmodul (2) direkt über eine Niedrigenergieweitverkehrnetzwerk Verbindung zu einem zentralen Datenserver (4) im Internet übertragen werden können zum Anzeigen der generierten Fehlermeldung an einen Nutzer,
wobei das Übertragen der Daten über eine Narrow-Band IoT-Verbindung erfolgt.

## Claims

1. Method for transmitting data of a tyre module (2) to a central data server, comprising at least the following steps:
a) providing a vehicle tyre (1) having a tyre module (2), wherein the tyre module (2) is used to capture measurement data and/or individual tyre data, the tyre module (2) being used to record at least the tyre pressure,
b) evaluating the measurement data and/or tyre data using a computer unit integrated in the tyre module (2), wherein the tyre module (2) is used to evaluate at least the tyre pressure, with a difference between the measured tyre pressure and a predefined setpoint value resulting in an error message being generated,
c) transmitting the measurement data and/or tyre data using a transmitting and receiving unit integrated in the tyre module (2),
wherein the measurement data and/or tyre data from the tyre module (2) are transmitted to the central data server (4) on the Internet directly by way of a low-energy wide area network,
no central receiving unit being interposed in the vehicle during the data transmission, and the data being transmitted by way of a narrowband loT connection,
d) receiving and evaluating the measurement data and/or tyre data using the central data server (4), and providing the data to a user, the error message generated in the event of a difference between the measured tyre pressure and a predefined setpoint value being displayed to the user.

2. Method according to the preceding claim,
**characterized in that**
in step d) the user is a vehicle driver and the evaluated measurement data are transmitted to a display apparatus (5) in the vehicle by way of a radio connection (6).

3. Method according to either of the preceding claims,
**characterized in that**
in step d) the user is a fleet operator, dealer, service provider or the solution operator and said user can use a web portal to access the evaluated data.

4. Method according to one of the preceding claims,
**characterized in that**
the error message is generated in the event of a difference of at least 5% from the setpoint value of the tyre pressure.

5. Method according to one of the preceding claims,
**characterized in that**
in step c) the tyre module (2) transmits data to the central data server (4) on the Internet in predefined time intervals by way of the low-energy wide area network.

6. Method according to one of the preceding claims,
**characterized in that** the tyre module (2) is arranged in a tyre cavity on the inside of the tyre, on the tyre rim or on the tyre valve.

7. Vehicle tyre (1) having a tread, a tyre belt, a tyre carcass having at least one carcass ply, sidewalls and a tyre bead having a tyre core and also a bead filler, wherein the vehicle tyre (1) comprises a tyre module (2) for capturing measurement data and/or individual tyre data, the tyre module (2) being able to be used to record at least the tyre pressure,
**characterized in that**
the tyre module (2) is also designed to evaluate measurement data and/or individual tyre data, wherein the tyre module (2) can be used to evaluate at least the tyre pressure, with a difference between the measured tyre pressure and a predefined setpoint value being able to result in an error message being generated,
the tyre module (2) comprises an integrated transmitting and receiving unit, wherein the transmitting and receiving unit can be used to transmit measurement data and/or tyre data from the tyre module (2) to a central data server (4) on the Internet directly by way of a low-energy wide area network in order to display the generated error message to a user,
the data being transmitted by way of a narrowband IoT connection.

## Revendications

1. Procédé de transmission de données d'un module de pneumatique (2) à un serveur de données central,
comprenant au moins les étapes suivantes :
a) fourniture d'un pneumatique de véhicule (1) muni d'un module de pneumatique (2), des données de mesure et/ou des données de pneumatique individuelles étant acquises au moyen du module de pneumatique (2), au moins la pression de pneumatique étant détectée au moyen du module de pneumatique (2),
b) évaluation des données de mesure et/ou des données de pneumatique au moyen d'une unité de calcul intégrée au module de pneumatique (2), au moins la pression de pneumatique étant évaluée au moyen du module de pneumatique (2), un message d'erreur étant généré dans le cas d'un écart de la pression de pneumatique mesurée par rapport à une valeur de consigne prédéfinie,
c) transmission des données de mesure et/ou des données de pneumatique au moyen d'une unité d'émission et de réception intégrée au module de pneumatique (2),
les données de mesure et/ou les données de pneumatique étant transmises directement sur l'Internet du module de pneumatique (2) au serveur de données central (4) par l'intermédiaire d'une liaison de réseau de communication longue portée faible consommation,
lors de la transmission de données, aucune unité de réception centrale n'étant interposée dans le véhicule et la transmission des données étant effectuée par l'intermédiaire d'une liaison loT à bande étroite,
d) réception et évaluation des données de mesure et/ou des données de pneumatique au moyen du serveur de données central (4) et fourniture des données à un utilisateur, le message d'erreur généré en cas d'écart entre la pression de pneumatique mesurée et une valeur de consigne prédéfinie étant présenté à l'utilisateur.

2. Procédé selon la revendication précédente, **caractérisé en ce que**, après l'étape d) l'utilisateur est un conducteur du véhicule et les données évaluées sont transmises dans le véhicule par l'intermédiaire d'une liaison radio (6) à un dispositif d'affichage (5).

3. Procédé selon l'une des revendications précédentes, **caractérisé en ce que**, après l'étape d) l'utilisateur est un exploitant de flotte, un concessionnaire, un prestataire de services ou l'exploitant de la solution et ce dernier peut accéder par l'intermédiaire d'un portail Web aux données évaluées.

4. Procédé selon l'une des revendications précédentes, **caractérisé en ce que** le message d'erreur est généré dans le cas d'un écart d'au moins 5% par rapport à la valeur de consigne de la pression de pneumatique.

5. Procédé selon l'une des revendications précédentes, **caractérisé en ce que**, le module de pneumatique (2), lors de l'étape c), transmet sur Internet au serveur de données central (4) des données à des intervalles de temps prédéfinis par l'intermédiaire du réseau de communication longue portée basse consommation.

6. Procédé selon l'une des revendications précédentes, **caractérisé en ce que** le module de pneumatique (2) est agencé dans une cavité de pneumatique sur le côté intérieur du pneumatique, sur la jante du pneumatique ou sur la valve du pneumatique.

7. Pneumatique de véhicule (1) comprenant une bande de roulement, une ceinture de pneumatique, une carcasse de pneumatique dotée d'au moins une nappe de carcasse, des flancs et un talon de pneumatique comprenant une âme de pneumatique ainsi qu'un bourrage sur tringle,
le pneumatique de véhicule (1) comportant un module de pneumatique (2) permettant d'acquérir des données de mesure et/ou des données de pneumatique individuelles, au moins la pression de pneumatique pouvant être détectée par le module de pneumatique (2),
**caractérisé en ce que**
le module de pneumatique (2) est également conçu pour évaluer des données de mesure et/ou des données de pneumatique individuelles, au moins la pression de pneumatique pouvant être évaluée au moyen du module de pneumatique (2), un message d'erreur pouvant être généré dans le cas d'un écart de la pression de pneumatique mesurée par rapport à une valeur de consigne prédéfinie,
le module de pneumatique (2) comporte une unité d'émission et de réception intégrée, des données de mesure et/ou des données de pneumatique pouvant être transmises directement sur Internet du module de pneumatique (2) à un serveur de données central (4) par l'intermédiaire d'une liaison de réseau de communication longue portée basse consommation pour présenter le message d'erreur généré à un utilisateur,
la transmission des données étant effectuée par l'intermédiaire d'une liaison loT à bande étroite.
